# EUROPÄISCHE PATENTSCHRIFT

(11) **EP 0 817 756 B1**
(45) Veröffentlichungstag und Bekanntmachung des Hinweises auf die Patenterteilung: **23.12.1998**
(21) Anmeldenummer: 96907484.8
(22) Anmeldetag: 15.03.1996
(51) Int. Cl.: C01B 13/11

(54) **OZONISATOR UND VERFAHREN ZUR HERSTELLUNG EINES SOLCHEN**
OZONIZER AND METHOD OF MANUFACTURING IT
OZONISEUR ET PROCEDE DE FABRICATION

(30) Priorität: 25.03.1995 DE 19511001
(43) Veröffentlichungstag der Anmeldung: 14.01.1998
(73) Patentinhaber: euroflamm GmbH, 28719 Bremen (DE)
(72) Erfinder: GADOW, Rainer, D-84544 Aschau am Inn (DE); RIEGE, Günter, D-65195 Wiesbaden (DE)
(74) Vertreter: Gahlert, Stefan, Dr.-Ing.
(86) Internationale Anmeldenummer: EP9601121
(87) Internationale Veröffentlichungsnummer: WO9630298

(56) Entgegenhaltungen:
- EP-A- 0 202 501
- EP-A- 0 385 177

## Beschreibung

Die Erfindung betrifft einen Ozonisator mit einer ersten Elektrode und einer zweiten Elektrode, zwischen denen ein Entladungsspalt gebildet ist, wobei auf der ersten Elektrode ein Dielektrikum angeordnet ist.

Die Erfindung betrifft ferner ein Verfahren zur Herstellung eines Ozonisators mit zwei Elektroden, zwischen denen ein Entladungsspalt gebildet ist, wobei ferner zwischen den Elektroden ein Dielektrikum angeordnet ist.

Ozonisatoren zur Herstellung von Ozon arbeiten nach dem Verfahren der stillen elektrischen Entladung. Ein Ozonisator besteht im Prinzip aus zwei gegenüberliegenden Elektroden, die durch einen Entladungsspalt und ein Dielektrikum voneinander getrennt sind. Durch den Entladungsspalt wird ein sauerstoffhaltiges Gas, z.B. Luft oder reiner Sauerstoff, geleitet, wobei durch elektrische Entladung im Entladungsspalt Ozon erzeugt wird. An die Elektroden werden Spannungen von etwa 5 bis 20 kV meist mit einer Wechselstromfrequenz von 50 bis 60 Hz angelegt. Höhere Frequenzen durch Vorschalten eines Frequenzumformers erlauben eine Steigerung der Ozon-Leistung.

Die Ozonausbeute von Ozonisatoren, d.h. die pro Flächeneinheit gebildete Ozonmenge, ist proportional der Dielektrizitätskonstante und umgekehrt proportional der Dicke des Dielektrikums.

Das Dielektrikum verhindert, daß die stille Entladung in eine Glimm- oder Bogenentladung übergeht, die nur noch einen Bruchteil der Ozon-Ausbeute liefern würde.

Aus der EP 0 202 501 B1 ist ein Ozonisator gemäß dem Oberbegriff des Patentanspruchs 1 bekannt, bei dem ein inneres Metallrohr als Innenelektrode dient, das außen mit einer dielektrischen Schicht aus Titanoxid-Keramik versehen ist, die durch eine Glas-Passivierungsschicht versiegelt ist. Die Außenelektrode wird durch ein äußeres Metallrohr gebildet, so daß der Entladungsspalt zwischen dem Dielektrikum auf der inneren Metallelektrode und dem äußeren Metallrohr gebildet ist.

Die Metallelektroden bei einem derartigen Ozonisator sind einem starken chemischen Angriff durch das gebildete Ozon ausgesetzt. Um dem starken korrosiven Angriff des Ozons standzuhalten, muß daher besonders die Titanoxid-Schicht mit der darüberliegenden Glas-Passivierungsschicht außerordentlich sorgfältig ausgeführt sein, um eine Korrosion des darunterliegenden Metallrohrs zu vermeiden. Des weiteren ist die Aufbringung einer Titanoxid-Schicht und einer zusätzlichen Passivierungsschicht relativ aufwendig und teuer.

Ein weiterer Ozonisator ähnlicher Art ist durch die EP 0 172 756 Al bekannt geworden.

Der bekannte Ozonisator weist ein inneres, innen metallisiertes Keramikrohr auf, das von einem äußeren Metallrohr unter Bildung eines dazwischenliegenden Entladungsspaltes umgeben ist. Bei dieser Ausführung dient das Keramikrohr selbst als Dielektrikum.

Da eine gewisse Mindestdicke des Keramikrohrs aus herstellungstechnischen Gründen nicht unterschritten werden kann, ist die Ozonausbeute auch bei einem derartigen Ozonisator relativ gering. Auch ist die Herstellung von Keramikrohren mit ausreichender Präzision außerordentlich aufwendig und teuer.

Durch die DE 26 18 243 C3 ist ein weiterer Ozonisator ähnlicher Art bekannt geworden, mit mindestens einem plattenförmigen oder zylindrischen, beiderseits von Luft beströmten Dielektrikum, das parallel bzw. konzentrisch zwischen jeweils einer plattenförmigen oder zylindrischen Hochspannungselektrode und einer plattenförmigen oder zylindrischen Erdungselektrode angeordnet ist. Dabei besteht das Dielektrikum aus einem Keramikmaterial mit 70 bis 95 % Aluminiumoxid, weniger als 25 % Siliziumoxid und weniger als 10 % mindestens eines Alkalioxids oder Erdalkalioxids und weist eine relative Dielektrizitätskonstante von 5 bis 10 und eine Dicke von 0,5 bis 1 mm auf.

Da die Ozonausbeute proportional zur Dielektrizitätskonstante und umgekehrt proportional zur Dicke des Dielektrikums ist, läßt sich so durch eine relativ dünne Schicht des Dielektrikums mit einer relativ hohen Dielektrizitätskonstante eine gute Ozonausbeute erreichen.

Problematisch ist bei dem bekannten Ozonisator die Herstellung der Platten oder Rohre aus einem Keramikmaterial mit ausreichender Präzision, was praktisch nur durch isostatisches Pressen und anschließendes Sintern möglich ist.

Aus der EP 0 385 177 A1 sind ferner ein Ozonisator und ein Verfahren zur Herstellung eines solchen bekannt geworden, bei dem ein Entladungsspalt zwischen zwei konzentrisch angeordneten Metallrohren gebildet ist, wobei auf das innenliegende Metallrohr eine Schicht aus Aluminium aufgebracht ist, auf die wiederum eine dielektrische Schicht aus mehreren übereinanderliegenden Schichten mit unterschiedlicher Dielektrizitätskonstante aufgebracht ist, wobei die an den Entladungsspalt angrenzende erste Schicht eine kleinere Dielektrizitätskonstante als die darunterliegende zweite Email-Schicht aufweist.

Die bekannte Anordnung und das bekannte Verfahren haben den Nachteil der aufwendigen und teuren Aufbringung der verschiedenen Email-Schichten.

Der Erfindung liegt die Aufgabe zugrunde, einen Ozonisator und ein Verfahren zur Herstellung eines solchen zu schaffen, wobei eine einfache und kostengünstige Herstellung ermöglicht ist und eine möglichst hohe Ozonausbeute und eine gute Korrosionsbeständigkeit im Langzeitbetrieb sichergestellt sind.

Diese Aufgabe wird bei einem Ozonisator der eingangs genannten Art dadurch gelöst, daß die erste Elektrode als metallische Schicht auf einem Träger aus Glas oder Glaskeramik vorgesehen ist, und daß das Dielektrikum als keramische Schicht auf der ersten Elektrode vorgesehen ist.

Durch die erfindungsgemäße Verwendung von Glas oder Glaskeramik als Trägermaterial für die Elektrode wird erfindungsgemäß ein kostengünstig mit äußerst hoher Fertigungspräzision herstellbarer Träger zur Verfügung gestellt, der gleichzeitig eine außerordentlich hohe Korrosionsbeständigkeit aufweist. Darüber hinaus weist der Träger gleichzeitig von Natur aus eine Gasdichtheit auf, was bei durch Sintern hergestellten Keramikrohren nicht ohne weiteres der Fall ist.

Zwar ist es grundsätzlich bei älteren Ozonisatoren bekannt, Glasrohre als Dielektrikum zu verwenden, jedoch wird erfindungsgemäß das Glas- oder Glaskeramikmaterial nicht als Dielektrikum sondern lediglich als Trägermaterial verwendet, auf das eine metallische Schicht als Elektrode und darauf wiederum eine keramische Schicht als Dielektrikum aufgebracht wird.

Somit wird erfindungsgemäß eine erhebliche Steigerung der Energieausbeute erreicht, da ein keramisches Material als Dielektrikum verwendet werden kann, dessen Dielektrizitätskonstante um ein Mehrfaches höher als bei üblichen Gläsern liegt, nämlich in der Größenordnung von etwa 20 bis 30, während übliche Gläser Dielektrizitätskonstanten von etwa 3 bis 5 aufweisen.

Dadurch daß ein mit äußerst hoher Präzision hergestellter Träger für die Elektrode und das Dielektrikum Verwendung findet, kann das Dielektrikum als relativ dünne Schicht mit einer Schichtdicke von wenigen Zehntelmillimetern bei ausreichend hoher Durchschlagfestigkeit vorgesehen werden.

Da die Energieausbeute umgekehrt proportional zur Schichtdicke des Dielektrikums ist, läßt sich so erfindungsgemäß eine weitere Steigerung der Energieausbeute erzielen.

Erfindungsgemäß wurde erkannt, daß sich ein Schichtaufbau mit einem Träger aus Glas oder Glaskeramik, auf dem eine metallische Elektrode aufgebracht ist, worauf sich wiederum eine keramische Dielektrikumschicht befindet, insbesondere mittels thermischen Spritzens derart hergestellt werden kann, daß die so hergestellten Ozonisatorröhren oder -platten ausreichend temperatur- und thermoschockbeständig sind.

Bisher wurde ein derartiger Schichtaufbau mit einem Träger aus Glas oder Glaskeramik nicht für möglich gehalten, da aufgrund der Unterschiede der thermischen Ausdehnungskoeffizienten bisher allgemein zu hohe Spannungen erwartet wurden.

Erfindungsgemäß wurde dieses Vorurteil überwunden, mit dem Ergebnis, daß ein erheblich verbesserter Ozonisator mit einer deutlich gesteigerten Energieausbeute zur Verfügung gestellt wurde.

Gemäß einer weiteren Ausgestaltung der Erfindung ist auch die zweite Elektrode als metallische Schicht auf einem zweiten Träger aus Glas oder Glaskeramik vorgesehen. In alternativer Ausführung kann die zweite, als Gegenelektrode wirkende Elektrode auch als metallische Massivelektrode ausgebildet sein, die vorzugsweise aus Edelstahl besteht. Da die Anforderungen an die Gegenelektrode, auf die kein Dielektrikum aufgebracht ist, bezüglich Maßhaltigkeit und Korrosionsbeständigkeit nicht so hoch wie die Anforderungen sind, die an die erste Elektrode gestellt werden, deren Maßhaltigkeit sich auch auf das darauf aufgebrachte Dielektrikum auswirkt, ist die Verwendung von metallischen Massivelektroden, die vorzugsweise aus Edelstahl bestehen, in der Regel ausreichend.

Der erfindungsgemäße Ozonisator kann als Röhren-Ozonisator ausgebildet sein.

Es versteht sich, daß der Ozonisator jedoch auch als Platten-Ozonisator ausgebildet sein kann, insbesondere deshalb, weil in jüngster Zeit auch Verfahren zur Herstellung von Glasplatten mit außerordentlich hoher Fertigungspräzision zur Verfügung stehen (sogenanntes Floatglas).

Wird der erfindungsgemäße Ozonisator als Platten-Ozonisator aufgebaut, so kann eine Mehrzahl von Entladungsspalten jeweils zwischen einer Elektrode und einer zugeordneten Gegenelektrode gebildet sein.

Mit einem derartigen sandwichartigen Aufbau läßt sich eine besonders kompakte Ausführung eines Ozonisators erreichen.

Bei dieser Ausführung weist vorzugsweise zumindest ein Träger beidseitig Elektroden und darauf Dielektrika auf.

Durch diesen Aufbau, der eine beidseitige Nutzung eines Trägers ermöglicht, ergibt sich eine weitere Verkleinerung der Baugröße und eine zusätzliche Kosteneinsparung.

In weiter vorteilhafter Ausgestaltung der Erfindung bestehen die auf einem Träger aus Glas oder Glaskeramik vorgesehenen Elektroden aus Aluminium oder einer Aluminiumlegierung, aus Titan oder einer Titanlegierung.

Sowohl Aluminium als auch Titan weisen eine hohe chemische Beständigkeit gegen Ozon auf, da sie an der Oberfläche eine dünne aber äußerst wirksame Passivierungsschicht bilden. Darüber hinaus ergibt sich eine besonders gute Haftung zu Glas bzw. einer Glaskeramik, da sowohl Aluminium als auch Titan als sogenannte Übergangsionen in das Glasnetzwerk eingebaut werden können.

Besonders bevorzugt ist dabei eine Aluminiumlegierung, die bis zu etwa 15 Gew.% Silizium enthält.

Durch die Zugabe von Silizium zu einer Aluminiumlegierung wird bekanntlich der Schmelzpunkt herabgesetzt, was zu einer Vereinfachung der Verarbeitung führt, und zum anderen wird eine weitere Verbesserung der Haftung an der Glasoberfläche erreicht. Die Beimischung von Silizium in der Aluminium-Silizium-Legierung führt zu einer noch weiter verbesserten Haftung, da Silizium als Glasbildner eine noch höhere Affinität zu Glas aufweist. Des weiteren wird durch den Legierungszusatz Silizium die Farbe der Aluminiumlegierung nicht verändert, so daß sich ein guter Spiegeleffekt an der Glasoberfläche und damit eine gute Ausbeute bei der Ozon-Herstellung ergibt.

Auch Nickelzusätze oder Titanzusätze verändern die Farbe der Aluminiumlegierung nicht, so daß in einer alternativen Ausführung der Erfindung auch eine Aluminiumlegierung verwendet werden kann, die Nickel oder Titan enthält. Es versteht sich, daß natürlich auch Mischlegierungen auf Aluminiumbasis mit Silizium, Titan und Nickel verwendet werden können.

Bei einer Aluminiumlegierung sollte der Legierungsbestandteil Silizium etwa 15 Gew.% nicht überschreiten, da die Leitfähigkeit von Al-Si-Legierungen bei übereutektischen Zusammensetzungen absinkt.

Besonders bevorzugt sind daher Al-Si-Legierungen mit eutektischer oder leicht untereutektischer Zusammensetzung. Annähernd eutektische Legierungen haben den zusätzlichen Vorteil, daß der Schmelzpunkt deutlich erniedrigt ist und sich somit eine besonders kostengünstige einfache Verarbeitung ergibt.

Dagegen bestehen derartige Einschränkungen bei Aluminiumlegierungen mit Nickel- oder Titanzusätzen nicht, da die Leitfähigkeit durch solche Zusätze nur unmerklich beeinflußt wird.

Bei einer weiteren vorteilhaften Ausgestaltung der Erfindung enthält das Dielektrikum Aluminiumoxid, Titanoxid oder Hafniumoxid.

Da Aluminiumoxid eine hohe Dielektrizitätskonstante aufweist, auf einfache und kostengünstige Weise herstellbar ist und durch thermisches Spritzen in der gewünschten Schichtdicke auf einfache Weise auf die darunterliegende Elektrode aufgetragen werden kann, ist Aluminiumoxid als Dielektrikum besonders geeignet. Besonders bevorzugt ist hierbei reines α-Aluminiumoxid.

In gleicher Weise kann auch Titanoxid als Dielektrikum verwendet werden, das gleichfalls eine hohe Dielektrizitätskonstante aufweist.

In alternativer Weise kann auch Hafniumoxid verwendet werden, das allerdings relativ selten und teuer ist.

In weiter bevorzugter Ausgestaltung der Erfindung besteht der Träger oder bestehen die Träger aus Borosilikatglas.

Diese Maßnahme hat den Vorteil, daß insbesondere Rohre und Flachglas aus Borosilikatglas mit äußerst hoher Präzision auf kostengünstige Weise herstellbar sind. Dies gilt insbesondere für das Borosilikatglas, das von der Firma Schott unter dem Markennamen Duran vertrieben wird.

In alternativer Weise kann als Träger eine Glaskeramik verwendet werden. Bei solchen Glaskeramiken handelt es sich in der Regel um Lithiumgläser, die nach der Herstellung einer gezielten Wärmebehandlung unterzogen werden, um eine weitgehende Kristallisation zu bewirken, wobei die Lithiumzusätze als Keimbildner wirken. Solche Glaskeramiken zeichnen sich insbesondere durch eine sehr hohe Temperaturbeständigkeit von bis zu etwa 800°C und durch eine hohe Thermoschockbeständigkeit aus, da ihr thermischer Ausdehnungskoeffizient in der Nähe von Null liegt. Derartige Glaskeramiken werden beispielsweise von der Firma Schott unter den Markennamen Ceran und Cerodur vertrieben. Die Verwendung einer solchen Glaskeramik ist insbesondere bei der Ausführung des Ozonisators als Platten-Ozonisator bevorzugt, da sich solche Glaskeramiken insbesondere in Plattenform mit ausreichend hoher Präzision herstellen lassen.

Die Erfindung wird ferner durch ein Verfahren zur Herstellung eines Ozonisators mit folgenden Schritten gelöst:
(a) Aufbringen einer metallischen Beschichtung als erste Elektrode auf einen ersten Träger aus Glas oder Glaskeramik,
(b) Aufbringen einer keramischen Beschichtung auf die erste Elektrode als Dielektrikum,
(c) Anordnen der ersten Elektrode und einer zweiten Elektrode mit Abstand voneinander derart, daß zwischen dem Dielektrikum und der zweiten Elektrode ein Entladungsspalt gebildet ist.

Wie bereits erwähnt, bietet die Verwendung von Glas oder Glaskeramik als Trägermaterial besondere Vorteile, da sich Glas und Glaskeramik mit ausreichend hoher Fertigungspräzision auf relativ kostengünstige Weise in Rohrform und in Plattenform herstellen lassen. Infolge von präzisen geometrischen Abmessungen des Trägermaterials ergeben sich gleichfalls besondere Vorteile hinsichtlich der Aufbringung der metallischen Elektrode und des Dielektrikums, wobei eine geringe Schichtdicke des Dielektrikums bei einer ausreichend hohen Durchschlagsfestigkeit erzielt werden kann.

In bevorzugter Weiterbildung der Erfindung wird das Dielektrikum durch thermisches Spritzen aufgebracht.

Das Aufbringen des Dielektrikums auf die Elektrode als keramische Beschichtung mittels thermischen Spritzens stellt ein relativ kostengünstiges Verfahren dar, mit dem sich die gewünschte Schichtdicke mit relativ hoher Genauigkeit erzeugen läßt. Dies hat wiederum den Vorteil, daß bei ausreichend hoher Durchschlagfestigkeit eine besonders dünne Dielektrikumschicht verwendet werden kann, was wiederum zu einer Verbesserung der Energieausbeute führt. Des weiteren lassen sich auf diese Weise reine Aluminiumoxid oder Titanoxid-Schichten auftragen, die als Dielektrika besonders bevorzugt sind. Somit werden Emaille-Schichten vermieden, die üblicherweise nach dem Stand der Technik verwendet werden.

In weiter bevorzugter Ausgestaltung der Erfindung werden auch die auf einem Glasträger vorgesehenen Elektroden durch thermisches Spritzen auf den Träger aufgebracht.

Auch dies birgt den Vorteil, daß sich hiermit auf einfache und kostengünstige Weise die gewünschte Schichtdicke mit relativ hoher Genauigkeit auf dem Glasträger oder auf dem Glaskeramikträger erzeugen läßt.

Bei diesem Verfahren ist die Verwendung einer Aluminiumlegierung von annähernd eutektischer Zusammensetzung besonders bevorzugt, da sich hierbei eine erhebliche Schmelzpunktreduzierung ergibt. Beispielsweise Titan oder Titanlegierungen erfordern dagegen eine erheblich höhere Verarbeitungstemperatur, was mit erhöhtem Aufwand und erhöhten Kosten verbunden ist.

In alternativer Weise ist es jedoch denkbar, zunächst den Glasträger durch eine entsprechende Vorbehandlung mit einem dünnen metallischen Überzug zu versehen und anschließend das Elektrodenmaterial mittels einer Galvanikbehandlung aufzubringen.

Falls diese Verfahrensweise gewählt wird, bieten sich natürlich auch Titan, Titanlegierungen oder andere höherschmelzende Metalle als Elektrodenmaterial an, sofern diese ausreichend korrosionsbeständig gegenüber Ozon sind.

Sowohl beim Aufbringen des Elektrodenmaterials als auch beim Aufbringen des Dielektrikums mittels thermischen Spritzens ist es erfindungsgemäß bevorzugt, wenn das darunterliegende Material zuvor aufgerauht wird, was zum Beispiel durch Sandstrahlen erfolgen kann. Erfindungsgemäß wurde erkannt, daß eine derartige Aufrauhung auch bei Glas oder Glaskeramik ohne weiteres durchgeführt werden kann, ohne daß Bruchgefahr besteht.

Es versteht sich, daß die vorstehend genannten und die nachstehend noch zu erläuternden Merkmale der Erfindung nicht nur in der jeweils angegebenen Kombination, sondern auch in Alleinstellung oder in anderen Kombinationen verwendbar sind, ohne den Rahmen der Erfindung zu verlassen.

Weitere Merkmale und Vorteile der Erfindung ergeben sich durch die nachfolgende Beschreibung bevorzugter Ausführungsbeispiele unter Bezugnahme auf die Zeichnung.

Es zeigen:
- Fig. 1: ein erstes Ausführungsbeispiel eines erfindungsgemäßen Röhren-Ozonisators im Querschnitt in schematischer Darstellung;
- Fig. 2: ein zweites Ausführungsbeispiel eines erfindungsgemäßen Ozonisators als Platten-Ozonisator im Querschnitt in schematischer Darstellung und
- Fig. 3: ein drittes Ausführungsbeispiel eines erfindungsgemäßen Ozonisators als Platten-Ozonisator.

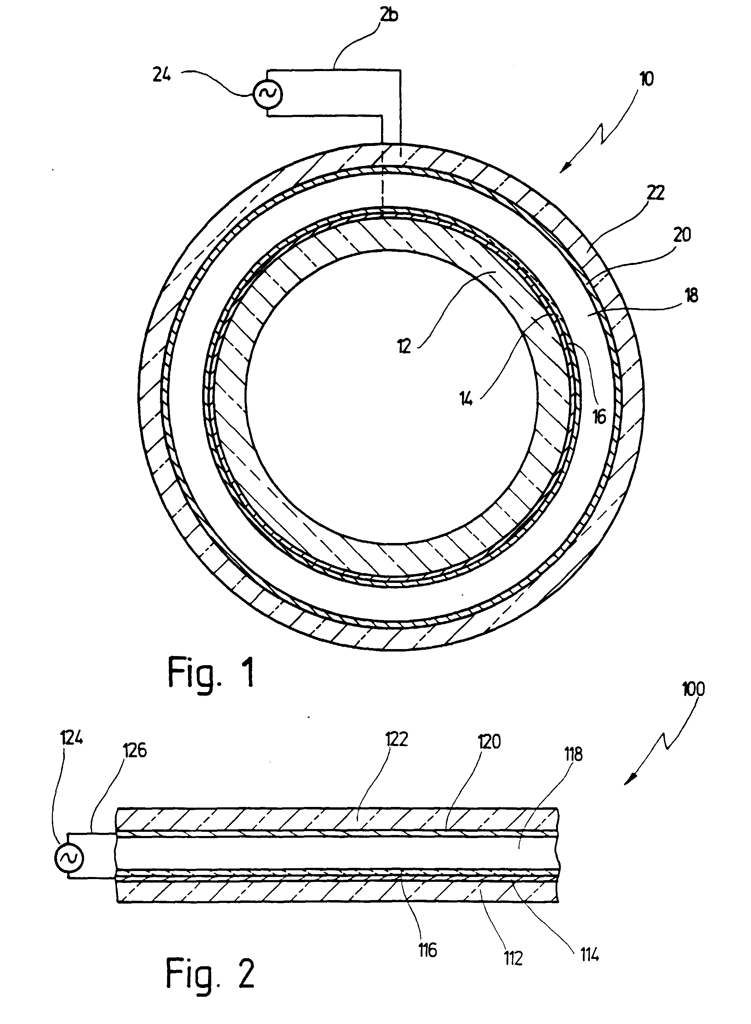

In Fig. 1 ist ein erfindungsgemäßer Ozonisator insgesamt mit der Ziffer 10 bezeichnet. Der Ozonisator weist zwei konzentrisch angeordnete Glasrohre als Träger auf, einen ersten, inneren Träger 12 und einen zweiten, äußeren Träger 22. Auf der Außenfläche des ersten Trägers 12 ist durch thermisches Spritzen, vorzugsweise durch Flammspritzen, eine Außenbeschichtung als Dielektrikum 14 erzeugt, die eine Schichtdicke von ca. 30 bis 70 µm aufweist.

Die metallische Beschichtung 14 kann aus Aluminium mit einer Reinheit von 99,95 % oder größer bestehen oder auch aus einer Aluminiumlegierung, vorzugsweise einer Aluminium-Silizium-Legierung etwa eutektischer Zusammensetzung (ca. 11,7 Gew.% Silizium). Daneben kann auch eine Aluminium-Nickel-Legierung, oder eine Aluminium-Titan-Legierung verwendet werden. Auch Mischlegierungen sind möglich.

Auf die erste Elektrode 14 ist eine weitere Beschichtung aus α-Aluminiumoxid oder aus Titanoxid als Dielektrikum 16 durch thermisches Spritzen, vorzugsweise durch Plasmaspritzen, aufgebracht.

Die Schichtdicke des Dielektrikums 16 ist größer als die Schichtdicke der Elektrode 14, um eine ausreichende Durchschlagsfestigkeit zu gewährleisten und liegt in der Größenordnung von etwa 0,3 bis 0,5 mm.

Der äußere Träger 22 ist an seiner Innenfläche gleichfalls mit einer Beschichtung aus Rein-Aluminium oder einer Aluminiumlegierung als Außenelektrode 20 versehen, die durch thermisches Spritzen aufgebracht ist.

Auch hierbei ist wiederum Rein-Aluminium oder eine Aluminium-Silizium-Legierung, vorzugsweise von annähernd eutektischer Zusammensetzung, bevorzugt.

Es versteht sich, daß stattdessen auch eine Außenelektrode aus Edelstahl verwendet werden kann.

Zwischen dem Dielektrikum 16 und der zweiten, äußeren Elektrode 20 ist ein Entladungsspalt 18 gebildet, durch den ein sauerstoffhaltiges Gas zur Ozonerzeugung geleitet wird.

Es versteht sich, daß die Darstellung in Fig. 1 nicht maßstabsgerecht ist, da die Dicke der Träger 12, 22 jeweils einige Millimeter beträgt, während die übrigen Schichtdicken deutlich darunter liegen.

Die Elektroden 14, 20 sind über Leitungen, die mit der Ziffer 26 angedeutet sind, mit einer Wechselspannungsquelle verbunden, die durch die Ziffer 24 angedeutet ist.

Dabei sind die Anschlüsse vorzugsweise an den äußeren Enden der Glasrohre vorgesehen, die im übrigen in geeigneter Weise an den Enden in einem Gehäuse gefaßt sind (nicht dargestellt). Die Träger 12, 22 werden ferner in bekannter Weise mittels Kühlflüssigkeit gekühlt.

Der Ozonisator wird in bekannter Weise mit einer Wechselspannung von etwa 5 bis 20 kV bei einer Wechselstromfrequenz von 50 bis 60 Hz oder einer Mittelfrequenz betrieben.

In Fig. 2 ist eine alternative Ausführung der Erfindung schematisch dargestellt und insgesamt mit der Ziffer 100 bezeichnet.

Der Ozonisator 100 weist zwei zueinander parallel angeordnete Glasplatten als Träger, einen ersten Träger 112, und einen zweiten Träger 122 auf, zwischen denen ein Entladungsspalt 118 gebildet ist. Die Oberfläche des ersten Trägers 112 ist auf der dem zweiten Träger 122 zugewandten Seite mit einer Beschichtung 114 aus Aluminium oder einer Aluminium-Silizium-Legierung, vorzugsweise annähernd eutektischer Zusammensetzung, versehen, die durch thermisches Spritzen aufgebracht ist und als erste Elektrode dient. Auf dieser ersten Elektrode 114 ist eine Beschichtung aus α-Aluminiumoxid als Dielektrikum 116, vorzugsweise durch Plasmaspritzen, aufgebracht.

Der zweite Träger 122 weist an ihrer dem Dielektrikum 116 gegenüberliegenden Oberfläche eine Beschichtung aus Rein-Aluminium oder aus einer Aluminium-Silizium-Legierung annähernd eutektischer Zusammensetzung auf, die als Gegenelektrode dient und durch thermisches Spritzen, vorzugsweise durch Flammspritzen, aufgebracht ist. Wiederum sind die Elektroden 114, 120 über entsprechende Leitungen 126 mit einer Wechselstromquelle 124 verbunden.

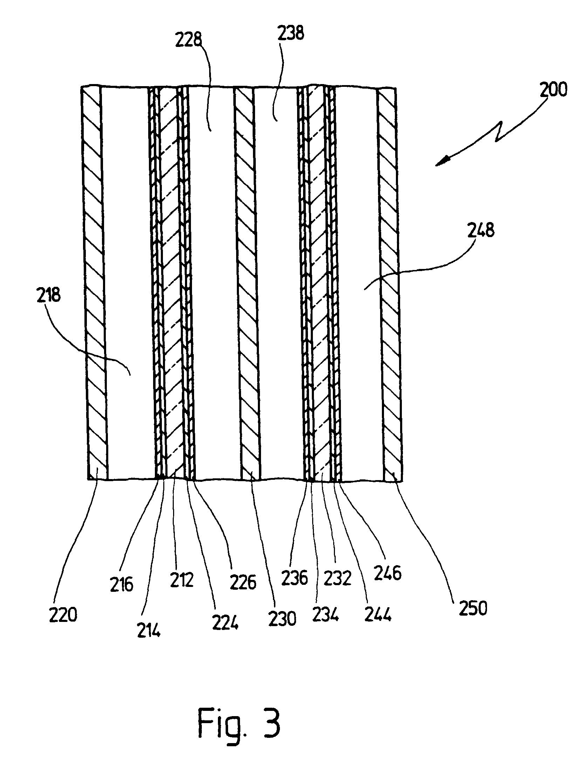

Ein weiteres Ausführungsbeispiel ist in Fig. 3 dargestellt und insgesamt mit der Ziffer 200 bezeichnet.

Auch hierbei handelt es sich um einen Platten-Ozonisator, der jedoch im Gegensatz zu dem zuvor anhand von Fig. 2 beschriebenen Ozonisator sandwichartig aus verschiedenen, nebeneinander angeordneten Schichten aufgebaut ist, derart, daß verschiedene Entladungsspalte 218, 228, 238, 248 in paralleler Anordnung zueinander gebildet sind.

Um eine Vereinfachung des Aufbaus zu erreichen, ist jeweils ein Träger aus Glas oder Glaskeramik 212 bzw. 232 auf beiden Seiten mit einer Elektrodenschicht aus reinem Aluminium oder einer Aluminium-Silizium-Legierung 214, 224 bzw. 234, 244 beschichtet, auf der jeweils wiederum eine Dielektrikumschicht 216, 226 bzw. 236, 246 durch thermisches Spritzen aufgebracht ist.

Zwischen den beiden Trägern 212, 232 ist eine Elektrode 230 angeordnet, die als Edelstahlplatte ausgeführt ist. Gleichfalls sind die äußeren Elektroden 220 bzw. 250 von Edelstahlplatten gebildet.

Somit ergibt sich insgesamt ein besonders kompakter Aufbau des Ozonisators durch die Nutzung der Träger 212, 232 jeweils auf beiden Seiten.

Es versteht sich, daß sich beim Aufbau von Ozonisatoren höherer Leistung natürlich weitere Entladungsspalte durch die Anordnung weiterer Ozonisator-Platten im sandwichartigen Verbund mit der zuvor beschriebenen Kombination aufbauen lassen.

## Patentansprüche

1. Ozonisator, mit einer ersten Elektrode (14; 114; 214) und einer zweiten Elektrode (20; 120; 220), zwischen denen ein Entladungsspalt (18; 118; 218) gebildet ist, wobei auf der ersten Elektrode (14; 114; 214) ein Dielektrikum (16; 116; 216) angeordnet ist, dadurch gekennzeichnet, daß die erste Elektrode (14; 114; 214) als metallische Schicht auf einem Träger (12; 112; 212) aus Glas oder Glaskeramik vorgesehen ist, und daß das Dielektrikum (16; 116; 216) als keramische Schicht auf der ersten Elektrode (14; 114; 214) vorgesehen ist.

2. Ozonisator nach Anspruch 1, dadurch gekennzeichnet, daß die zweite Elektrode (20; 120) als metallische Schicht auf einem zweiten Träger (22; 122) aus Glas oder Glaskeramik vorgesehen ist.

3. Ozonisator nach Anspruch 1, dadurch gekennzeichnet, daß die zweite Elektrode (220) als metallische Massivelektrode ausgebildet ist.

4. Ozonisator nach einem oder mehreren der vorhergehenden Ansprüche, dadurch gekennzeichnet, daß der Ozonisator als Röhren-Ozonisator ausgebildet ist.

5. Ozonisator nach einem oder mehreren der Ansprüche 1 bis 3, dadurch gekennzeichnet, daß der Ozonisator als Platten-Ozonisator ausgebildet ist, bei dem eine Mehrzahl von Entladungsspalten (218, 228, 238, 248) jeweils zwischen einer Elektrode (214, 224, 234, 244) und einer zugeordneten Gegenelektrode (220, 230, 240, 250) gebildet ist.

6. Oszonisator nach Anspruch 5, dadurch gekennzeichnet, daß zumindest ein Träger (212, 232) beidseitig Elektroden (214, 224, 234, 244) und darauf Dielektrika (216, 226, 236, 246) trägt.

7. Ozonisator nach einem der vorhergehenden Ansprüche, dadurch gekennzeichnet, daß die auf einem Träger (12, 22; 112, 122; 212, 232) aus Glas oder Glaskeramik vorgesehenen Elektroden (14, 20; 114, 120; 214, 224, 234, 244) aus Aluminium oder einer Aluminiumlegierung, aus Titan oder einer Titanlegierung bestehen.

8. Ozonisator nach Anspruch 7, dadurch gekennzeichnet, daß die Aluminiumlegierung bis zu etwa 15 Gew.% Silizium enthält.

9. Ozonisator nach Anspruch 7 oder 8, dadurch gekennzeichnet, daß die Aluminiumlegierung Nickel enthält.

10. Oszonisator nach Anspruch 7, 8 oder 9, dadurch gekennzeichnet, daß die Aluminiumlegierung Titan enthält.

11. Ozonisator nach einem oder mehreren der Ansprüche 3 bis 10, dadurch gekennzeichnet, daß die als Massivelektroden ausgebildeten Elektroden (220, 230, 250) aus Edelstahl bestehen.

12. Ozonisator nach einem oder mehreren der vorhergehenden Ansprüche, durch gekennzeichnet, daß das Dielektrikum Alumniumoxid enthält.

13. Ozonisator nach einem oder mehreren der vorhergehenden Ansprüche, dadurch gekennzeichnet, daß das Dielektrikum Titanoxid enthält.

14. Ozonisator nach einem oder mehreren der vorhergehenden Ansprüche, dadurch gekennzeichnet, daß das Dielektrikum Hafniumoxid enthält.

15. Ozonisator nach einem oder mehreren der vorhergehenden Ansprüche, dadurch gekennzeichnet, daß die Träger (12, 22; 112, 122; 212, 232) aus Borosilikatglas bestehen.

16. Ozonisator nach einem oder mehreren der Ansprüche 1 bis 14, dadurch gekennzeichnet, daß die Träger (212, 232) aus Glaskeramik bestehen.

17. Ozonisator nach einem oder mehreren der vorhergehenden Ansprüche, dadurch gekennzeichnet, daß mindestens eine der Elektroden aus einer annähernd eutektischen Legierung aus Aluminium und Silizium, aus Aluminium und Nickel oder aus Aluminium und Titan besteht.

18. Verfahren zur Herstellung eines Ozonisators mit folgenden Schritten:
(a) Aufbringen einer metallischen Beschichtung als erste Elektrode (14; 114; 214) auf einen ersten Träger (12; 112; 212) aus Glas oder Glaskeramik,
(b) Aufbringen einer keramischen Beschichtung auf die erste Elektrode (14; 114; 214) als Dielektrikum (16; 116; 216),
(c) Anordnen der ersten Elektrode (14; 114; 214) und einer zweiten Elektrode (20; 120; 220) mit Abstand voneinander derart, daß zwischen dem Dielektrikum (16; 116; 216) und der zweiten Elektrode (20; 120; 220) ein Entladungsspalt (18; 118; 218) gebildet ist.

19. Verfahren nach Anspruch 18, bei dem das Dielektrikum durch thermisches Spritzen aufgebracht wird.

20. Verfahren nach Anspruch 18 oder 19, bei dem mindestens eine der Elektroden durch thermisches Spritzen auf den Träger aufgebracht wird.

21. Verfahren nach Anspruch 18 oder 19, bei dem mindestens eine der Elektroden galvanisch nach einer vorherigen Metallisierung des Trägers aufgebracht wird.

22. Verfahren nach Anspruch 20, bei dem vor Aufbringen der Beschichtung das darunterliegende Material aufgerauht wird.

23. Verfahren nach einem oder mehreren der Ansprüche 18 bis 22, bei dem für mindestens eine der Elektroden eine Aluminiumlegierung mit bis zu etwa 15 Gew.% Silizium verwendet wird.

24. Verfahren nach einem oder mehreren der Ansprüche 18 bis 23, bei dem für das Dielektrikum ein Keramikmaterial verwendet wird, das Aluminiumoxid enthält.

25. Verfahren nach einem oder mehreren der Ansprüche 18 bis 24, bei dem für das Dielektrikum ein Keramikmaterial verwendet wird, das Titanoxid enthält.

26. Verfahren nach einem oder mehreren der Ansprüche 18 bis 25, bei dem für das Dielektrikum ein Keramikmaterial verwendet wird, das Hafniumoxid enthält.

## Claims

1. Ozonizer having a first electrode (14; 114; 214) and a second electrode (20; 120; 220) with a discharge gap (18; 118; 218) formed between them, the first electrode (14; 114; 214) being covered with a dielectric (16; 116; 216), characterized in that the first electrode (14; 114; 214) is designed as a metal layer on a glass or glass-ceramic substrate (12; 112, 212) and the dielectric (16; 116; 216) is designed as a ceramic layer on the first electrode (14; 114; 214).

2. Ozonizer according to claim 1, characterized in that the second electrode (20; 120) is designed as a metal layer on a second glass or glass-ceramic substrate (22; 122).

3. Ozonizer according to claim 1, characterized in that the second electrode (220) is designed as solid metal electrode.

4. Ozonizer according to one or more of the preceding claims, characterized in that the ozonizer is designed as tube-type ozonizer.

5. Ozonizer according to one or more of claims 1 to 3, characterized in that the ozonizer is designed as plate-type ozonizer, with a plurality of discharge gaps (218, 228, 238, 248) respectively provided between an electrode (214, 224, 234, 244) and an associated counter-electrode (220, 230, 240, 250).

6. Ozonizer according to claim 5, characterized in that at least one substrate (212, 232) carries on both of ita sides electrodes (214, 224, 234, 244) and dielectrics (216 226, 236, 246) on top thereof.

7. Ozonizer according to one of the preceding claims, characterized in that the electrodes (14, 20; 114, 120; 214, 224, 234, 244) provided on a glass or glass-ceramic substrate (12, 22; 112, 122; 212, 232) consist of aluminium or an aluminium alloy, of titanium or a titanium alloy.

8. Ozonizer according to claim 7, characterized in that the aluminium alloy contains up to approximately 15 % by weight of silicon.

9. Ozonizer according to claim 7 or 8, characterized in that the aluminium alloy contains nickel.

10. Ozonizer according to claim 7, 8 or 9, characterized in that the aluminium alloy contains titanium.

11. Ozonizer according to one or more of claims 3 to 10, characterized in that the electrodes (220, 230, 250), that are designed as solid electrodes, consist of high-grade steel.

12. Ozonizer according to one or more of the preceding claims, characterized in that the dielectric contains aluminium oxide.

13. Ozonizer according to one or more of the preceding claims, characterized in that the dielectric contains titanium oxide.

14. Ozonizer according to one or more of the preceding claims, characterized in that the dielectric contains hafnium oxide.

15. Ozonizer according to one or more of the preceding claims, characterized in that the substrates (12, 22; 112, 122; 212, 232) consist of blorosilicate glass.

16. Ozonizer according to one or more of claims 1 to 14, characterized in that the substrates (212, 232) consist of glass ceramic.

17. Ozonizer according to one or more of the preceding claims, characterized in that at least one of the electrodes consists of a nearly eutectic alloy of aluminium and silicon, aluminium and nickel, or aluminium and titanium.

18. Method of manufacturing an ozonizer comprising the steps of:
(a) Applying a metal film as a first electrode (14;114;214) on a first glass or glass-ceramic substrate (12; 112; 212);
(b) applying a ceramic film as dielectric (16; 116; 216) upon the first electrode (14; 114; 214);
(c) arranging the first electrode (14; 114; 214) and a second electrode (20; 120; 220) at a spacing one from the other so as to form a discharge gap (18; 118; 218) between the dielectric (16; 116; 216) and the second electrode (20; 120; 220).

19. Method according to claim 18, wherein the dielectric is applied by thermal spraying.

20. Method according to claim 18 or claim 19, wherein at least one of the electrodes is applied upon the substrate by thermal spraying.

21. Method according to claim 18 or claim 19, wherein at least one of the electrodes is applied by an electroplating process, after the substrate has been metallized.

22. Method according to claim 20, wherein the underlying material is roughened prior to applying the the coating.

23. Method according to one or more of claims 18 to 22, wherein an aluminium alloy containing up to approximately 15 % by weight of silicon is used for at least one of the electrodes.

24. Method according to one or more of claims 18 to 23, wherein a ceramic material containing aluminium oxide is used for the dielectric.

25. Method according to one or more of claims 18 to 24, wherein a ceramic containing titanium oxide is used for the dielectric.

26. Method according to one or more of claims 18 to 25, wherein a ceramic material containing hafnium oxide is used for the dielectric.

## Revendications

1. Ozoniseur doté d'une première électrode (14 ; 114 ; 124) et d'une deuxième électrode (20 ; 120 ; 220), entre lesquelles est formé un espace de décharge (18 ; 118 ; 218), un diélectrique (16 ; 116 ; 216) étant placé sur la première électrode (14 ; 114 ; 124), caractérisé en ce que la première électrode (14 ; 114 ; 124) est prévue sous la forme d'une couche métallique sur un support (12 ; 112 ; 212) en verre ou en vitrocéramique, et en ce que le diélectrique (16 ; 116 ; 216) est prévu sous la forme d'une couche céramique sur la première électrode (14 ; 114 ; 124).

2. Ozoniseur selon la revendication 1, caractérisé en ce que la deuxième électrode (20 ; 120) est prévue sous la forme d'une couche métallique sur un deuxième support (22 ; 122) en verre ou en vitrocéramique.

3. Ozoniseur selon la revendication 1, caractérisé en ce que la deuxième électrode (220) est conformée en électrode massive métallique.

4. Ozoniseur selon une ou plusieurs des revendications précédentes, caractérisé en ce que l'ozoniseur est conformé en ozoniseur tubulaire.

5. Ozoniseur selon une ou plusieurs des revendications 1 à 3, caractérisé en ce que l'ozoniseur est conformé en ozoniseur en plaque dans lequel une pluralité d'espaces de décharge (218, 228, 238, 248) est formée à chaque fois entre une électrode (214, 224, 234, 244) et une contre-électrode (220, 230, 240, 250) associée.

6. Ozoniseur selon la revendication 5, caractérisé en ce qu'au moins un support (212, 232) porte de chaque côté des électrodes (214, 224, 234, 244), et par-dessus, des diélectriques (216, 226, 236, 246).

7. Ozoniseur selon l'une quelconque des revendications précédentes, caractérisé en ce que les électrodes (14, 20 ; 114, 120 ; 214, 224, 234, 244) prévues sur un support (12, 22 ; 112, 122 ; 212, 232) en verre ou en vitrocéramique sont constituées d'aluminium ou d'un alliage d'aluminium, de titane ou d'un alliage de titane.

8. Ozoniseur selon la revendication 7, caractérisé en ce que l'alliage d'aluminium contient jusqu'à environ 15 % en poids de silicium.

9. Ozoniseur selon la revendication 7 ou 8, caractérisé en ce que l'alliage d'aluminium contient du nickel.

10. Ozoniseur selon la revendication 7, 8 ou 9, caractérisé en ce que l'alliage d'aluminium contient du titane.

11. Ozoniseur selon une ou plusieurs des revendications 3 à 10, caractérisé en ce que les électrodes (220, 230, 250) conformées en électrodes massives sont constituées d'acier spécial.

12. Ozoniseur selon une ou plusieurs des revendications précédentes, caractérisé en ce que le diélectrique contient de l'oxyde d'aluminium.

13. Ozoniseur selon une ou plusieurs des revendications précédentes, caractérisé en ce que le diélectrique contient de l'oxyde de titane.

14. Ozoniseur selon une ou plusieurs des revendications précédentes, caractérisé en ce que le diélectrique contient de l'oxyde de hafnium.

15. Ozoniseur selon une ou plusieurs des revendications précédentes, caractérisé en ce que les supports (12, 22 ; 112, 122 ; 212, 232) se composent de verre borosilicaté.

16. Ozoniseur selon une ou plusieurs des revendications 1 à 14, caractérisé en ce que les supports (212, 232) se composent de vitrocéramique.

17. Ozoniseur selon une ou plusieurs des revendications précédentes, caractérisé en ce qu'au moins l'une des électrodes se compose d'un alliage de composition approximativement eutectique d'aluminium et de silicium, d'aluminium et de nickel ou d'aluminium et de titane.

18. Procédé de fabrication d'un ozoniseur comprenant les étapes suivantes :
(a) application d'un revêtement métallique servant de première électrode (14 ; 114 ; 214) sur un premier support (12 ; 112 ; 212) en verre ou en vitrocéramique,
(b) application d'un revêtement céramique sur la première électrode (14 ; 114 ; 214) pour servir de diélectrique (16 ; 116 ; 216),
(c) agencement de la première électrode (14 ; 114 ; 214) et d'une deuxième électrode (20 ; 120 ; 220) à distance l'une de l'autre de telle manière qu'entre le diélectrique (16 ; 116 ; 216) et la deuxième électrode (20 ; 120 ; 220) se forme un espace de décharge (18 ; 118 ; 218).

19. Procédé selon la revendication 18, dans lequel le diélectrique est appliqué par pulvérisation thermique.

20. Procédé selon la revendication 18 ou 19, dans lequel au moins l'une des électrodes est appliquée sur le support par pulvérisation thermique.

21. Procédé selon la revendication 18 ou 19, dans lequel au moins l'une des électrodes est appliquée de manière galvanique après métallisation préalable du support.

22. Procédé selon la revendication 20, dans lequel le matériau sous-jacent est rendu rugueux avant d'appliquer le revêtement.

23. Procédé selon une ou plusieurs des revendications 18 à 22, dans lequel on utilise pour au moins l'une des électrodes un alliage d'aluminium avec jusqu'à environ 15 % en poids de silicium.

24. Procédé selon une ou plusieurs des revendications 18 à 23, dans lequel on utilise pour le diélectrique un matériau céramique contenant de l'oxyde d'aluminium.

25. Procédé selon une ou plusieurs des revendications 18 à 24, dans lequel on utilise pour le diélectrique un matériau céramique contenant de l'oxyde de titane.

26. Procédé selon une ou plusieurs des revendications 18 à 25, dans lequel on utilise pour le diélectrique un matériau céramique contenant de l'oxyde de hafnium.
